# EUROPÄISCHE PATENTSCHRIFT

(11) **EP 0 535 602 B1**
(45) Veröffentlichungstag und Bekanntmachung des Hinweises auf die Patenterteilung: **01.04.1998**
(21) Anmeldenummer: 92116664.1
(22) Anmeldetag: 29.09.1992
(51) Int. Cl.: H04Q 3/545, H04M 3/58, H04M 3/42

(54) **Verfahren für den Betrieb einer Programmgesteuerten Kommunikationsanlage, bei der eine Verbindungsanforderung gleichzeitig an mehrere Kommunikationsendgeräte signalisiert wird**
Method for operating a programm-controlled communications system in which a connection request is simultaneously signalled at several communications terminals
Procédé pour faire fonctionner un système de communication avec commande programmée dans lequel une demande de connexion est signalée simultanément dans plusieurs terminaux de communication

(30) Priorität: 30.09.1991 DE 4132588
(43) Veröffentlichungstag der Anmeldung: 07.04.1993
(73) Patentinhaber: SIEMENS AKTIENGESELLSCHAFT, 80333 München (DE)
(72) Erfinder: Crevits, Luc, B-8880 Tielt (BE); Vanlandeghem, Marec, B-9800 Deinze (BE)

(56) Entgegenhaltungen:
- EP-A- 0 360 898
- WO-A-79/00252
- DE-A- 3 818 087
- ERICSSON REVIEW Bd. 60, Nr. 1 , 1983 , STOCKHOLM SE Seiten 7 - 13 GREGER JISMALM 'OFFICE COMMUNICATION SYSTEM DIAVOX 406'

## Beschreibung

Die Erfindung betrifft ein Verfahren für den Betrieb einer programmgesteuerten Kommunikationsanlage, an die Kommunikationsendgeräte angeschlossen sind, die Leitungs- und/oder Funktionstasten aufweisen, durch deren Betätigung vermittlungstechnische Prozeduren und Verbindungsaufbauprozeduren einleitbar sind, wobei die diese Prozeduren einleitende und steuernde Information sowie die Tasten-Identifikationsinformationen in den einer Taste jeweils zugeordneten Speicherbereichen der Datenbasis, auf die die zentrale Anlagensteuerung zugreift, enthalten sind und innerhalb der Datenbasis gerätebezogene Informationen u. a. über Anschlußkonstellationen, Berechtigungen und Dienste und Informationen über physikalische Funktionen, wie beispielsweise die Art der Schnittstellen, abgespeichert sind, und wobei als eine solche Gerätekonstellation mindestens eine aus wenigstens einem ersten Kommunikationsendgerät und einem zweiten Kommunikationsendgerät bestehende Gruppe vorgesehen ist und eine für das erste Kommunikationsendgerät adressierte ankommende Verbindung gleichzeitig sowohl am ersten als auch am zweiten Kommunikationsendgerät, vorzugsweise in unterschiedlicher Art, signalisiert wird, wobei in dynamisch zuzuordnenden Speicherabschnitten eines Arbeitsspeichers, die als Verbindungsspeicherelemente und als sogenannte Warteschlangenspeicherelemente dienen, verbindungsindividuelle Informationen sowohl während des Verbindungsaufbaus als auch bei einer bestehenden Verbindung durch die zentrale Anlagensteuerung eingespeichert und ausgelesen werden.

Eine modern konzipierte digitale rechnergesteuerte Kommunikationsvermittlungsanlage besteht im Prinzip aus einer Vielzahl vermittlungstechnischer Funktionseinheiten und einem programmierbaren digitalen Rechnersystem, das diese Funktionseinheiten steuert und alle vermittlungstechnischen Abläufe überwacht.

Zu diesem Zweck wird das Rechnersystem mit Informationen über den Betriebszustand der Funktionseinheiten und über Zustandsänderungen, insbesondere über Eingaben an den angeschlossenen Endgeräten, informiert. Es kann deshalb bei Bedarf umgehend entsprechende Steueranweisungen und Meldungen erstellen und ausgeben.

Derartige Kommunikationsvermittlungsanlagen, insbesondere Fernsprechnebenstellenanlagen, sind neben der eigentlichen Vermittlungssteuerung auch zu einer Steuerung bzw. Realisierung zusätzlicher, über den eigentlichen Vermittlungsvorgang hinausgehender Steuervorgänge befähigt. Solche zusätzlichen Funktionen werden im allgemeinen als Leistungsmerkmale bezeichnet, wobei insbesondere für den Kommunikationsdienst "Sprache" eine große Zahl unterschiedliche Leistungsmerkmale bekannt ist. Derartige Leistungsmerkmale können entweder bei Belegen der Vermittlungseinrichtung oder aber während einer bereits bestehenden Gesprächsverbindung eingeleitet werden. Zu solchen Leistungsmerkmalen zählen beispielsweise die Verhinderung unerwünschter Verbindungen, akustische und/oder optische auf einer optischen Anzeigeeinrichtung darstellbare Hinweise für wartende Teilnehmer und für die jeweilige Bedienperson eines Endgerätes in unterschiedlichen vermittlungstechnischen Zuständen sowie die Möglichkeit einer Rückfrage zu einem anderen Teilnehmer aus einer bestehenden Gesprächsverbindung heraus. In einem solchen Fall wird dann der Partner der ursprünglichen Gesprächsverbindung in eine Warteposition übergeführt, wobei dann dieses ursprüngliche Gespräch nach einer Rückfrageverbindung erneut übernommen werden kann.

Für mehrere, an die Kommunikationsvermittlungsanlage angeschlossene Endgeräte kann eine besondere Konstellation insofern bestehen, als ein Anruf, der für ein bestimmtes Endgerät dieser Gruppe bestimmt ist, an alle weiteren, zur Gruppe gehörigen Endgeräte gleichzeitig signalisiert wird. Er wird bevorzugt von einem dafür bestimmten Endgerät entgegengenommen (Multi Line Appearance). Derartige Endgeräte können beispielsweise einem Chef-Teilnehmer und der Sekretärin zugeordnet sein. Derartige, in einer besonderen Konstellation zueinanderstehenden Endgeräte können auch zu einer Gruppe von Endgeräten gehören, die mit Funktionen ausgestattet sind, wie sie üblicherweise für in sogenannten Reihenanlagen eingesetzte Endgeräte üblich sind. dies bedeutet, daß das vermittlungstechnische Belegen von Anschlußleitungen, die Herstellung von Internverbindungen und die Inanspruchnahme von Leistungsmerkmalen auf Tstenbetätigung hin erfolgt. Diese Funktionen werden durch in die Nebenstellenanlage integrierte Programme realisiert. Der hierfür erforderliche Informationsaustausch zwischen den Endgeräten und der Nebenstellenanlage ist durch eine Teilnehmersignalisierungsprozedur in einem zwischen der Anlage und den Endgeräten angeordneten Signalisierungskanal möglich. Eine solche Konstellation mit Reihenanlagen-Kommunikationsendgeräten ist beispielsweise durch die europäische Patentanmeldung EP-A-0 360 898 bekannt. Darin ist ein Verfahren beschrieben, mit dem Verbindungen, die an eine Kommunikationsanlage ankommen an eines von mehreren Kommunikationsendgeräten, die Reihenanlagen-Funktionen aufweisen, herangezogen werden können. Die ankommende Verbindung ist dabei an das abfragende oder ein anderes Endgerät adressiert, wobei beide einer Gruppe -z. B. einer Reihenanlagengruppe- von Endgeräten angehören.

Bei einem Verbindungsaufbau wird jeweils ein Speicherelement eines dynamischen Speichers zugeordnet, in das Kennungen eingeschrieben werden, die die an einer solchen Verbindung beteiligten Endgeräte kennzeichnen. Werden beispielsweise mehrere derartige Verbindungen in der Weise gekettet, daß beispielsweise im Zusammenhang mit einer mehrfach vorgenommenen Rückfrage Endgeräte zu kennzeichnen sind, die sich in einer Warteposition oder in einer aktuellen Verbindung befinden, so erfordert dies eine entsprechend hohe Zahl von Einträgen in ein und demselben Verbindungsspeicher. Bei mehr als drei endgerätebezogenen Einträgen, die beispielsweise die Kennung für die beiden an einer Gesprächsverbindung beteiligten Engeräte und die Kennung für ein Im Haltezustand befindliches Endgerät betreffen können, ist für die Bildung der darüber hinausgehenden endgerätebezogenen Informationen und für die Verwaltung dieser Informationen ein erhöhter Aufwand an Rechnerkapazität und zwangsläufig ein erhöhter Programmieraufwand für die Steuerungs- und Verwaltungsprozeduren erforderlich. Diese Verwaltungsprozeduren umfassen u. a. Prüfungsroutinen, mit denen festgestellt werden muß, ob in der Relation der einzelnen Geräte zueinander ein Zustandswechsel eingetreten ist oder ob sich ein Gerät, z. B. durch Auflegen, freigeschaltet hat.

Der Erfindung liegt die Aufgabe zugrunde, insbesondere für mindestens zwei in der geschilderten besonderen Konstellation zueinander stehenden Endgeräte die üblichen Verkehrsmöglichkeiten zuzulassen, ohne daß besonders komplexe Steuerprozeduren hierfür zugrundegelegt werden müssen.

Dies wird ausgehend von des eingangs geschilderten Verfahrens dadurch erreicht, daß in den Fällen, in denen die an den beiden Kommunikationsendgeräten gleichzeitig signalisierte ankommende Verbindung von dem zweiten Kommunikationsendgerät zunächst angenommen und anschließend in einen Haltezustand übergeführt wurde, von diesem Endgerät zu dem erstgenannten Kommunikationsendgerät eine Verbindungsherstellung unter Heranziehung eines von der bereits vorab aufgebauten Verbindung unabhängigen Verbindungsspeicherelementes eine Verbindungsherstellung eingeleitet und durch die zentrale Anlagensteuerung die Durchschaltung bewirkt wird, daß durch die Betätigung einer Sonderfunktionstaste aufgrund der damit zur Kommunikationsanlage übermittelten Tasten-Identifikationsinformation und aufgrund der daraufhin aus dem zugeordneten Speicherbereich der Datenbasis ausgelesenen vermittlungstechnischen Prozeduren durch die zentrale Anlagensteuerung sowohl die Auslösung der zwischen dem ersten und dem zweiten Kommunikationsendgerät bestehenden Verbindung als auch gleichzeitig die Übermittlung einer besonderen Signalisierungsinformation über den Signalisierungskanal zu dem ersten Kommunikationsendgerät veranlaßt wird, daß durch diese besondere Signalisierungsinformation automatisch eine der Rufannahme entsprechende Meldung erzeugt und damit die Verbindungsaufbauprozedur eingeleitet und das Durchschalten des ersten Kommunikationsendgerätes zu dem in den Haltezustand übergeführten Kommunikationsendgerät bewirkt wird.

Durch die Betätigung der erfindungsgemäß vorgesehenen Sonderfunktionstaste am zweiten Endgerät (Sekretär-Teilnehmer) ist somit eine Verbindung zwischen dem ersten Endgerät (Chef-Teilnehmer) der aus diesen beiden genannten Endgeräten bestehenden besonderen Endgerätekonstellationsgruppe zu dem ursprünglich rufenden Endgerät vermittelbar. Dies ist möglich, ohne daß dabei die sonst erforderlichen Bedienprozeduren durchzuführen sind. In dieser besonderen Konstellation können diese Endgeräte beispielsweise Chef-/Sekretär-Sprechstellen entsprechen. Der in diesem Zusammenhang notwendige Verbindungsaufbau zwischen dem ersten und dem zweiten Kommunikationsendgerät kann vollständig durch die Betätigung einer weiteren Funktionstaste durchgeführt werden. Dieses Vermitteln des Anrufes nach Art einer Zuteilung kann auch bei unterschiedlichen vermittlungstechnischen Zuständen, die das ursprünglich rufende Endgerät einnimmt, erfolgen. Es ist in besonders vorteilhafter Weise auch dann möglich, wenn dieses ursprünglich rufende Endgerät seinerseits ein Endgerät bzw. einen Amtssatz aus einer vorab bestehenden Gesprächsverbindung in eine Warteposition übergeführt hat. Das nachfolgende Gespräch wird also aus einem Rückfragegesprächszustand heraus aufgebaut. Nachdem diese vorab bestehende Verbindungskette durch das zweite Endgerät der genannten Endgerätekonstellation in den Haltezustand gebracht wurde, läßt sich also im Sinne einer zweiten Rückfrage die Verbindung zwischen diesem zweiten und dem ersten Endgerät aufbauen, ohne daß ein Verbindungsspeicher durch einen endgerätebezogenen Speicherplatz erweitert werden muß. Anstelle einer echten zweiten Rückfragemöglichkeit ist also erfindungsgemäß eine alternative Möglichkeit vorgesehen, bei der der Aufwand für zusätzliche Programme minimiert ist. Insbesondere im Hin; blick auf die Einträge in den Verbindungsspeichern können die für die üblichen Abläufe bereits implementierten Prozeduren herangezogen werden, da diese auch im Zusammenhang mit dieser alternativ für die zweite Rückfrage stehenden erfindungsgemäßen Lösung grundsätzlich unverändert beibehalten werden können.

Nach einer weiteren vorteilhaften Ausgestaltung der Erfindung erfolgt primär die Durchschaltung des ersten Kommunikationsendgerätes der besonderen Gerätekonstellation zu dem durch das zweite Kommunikationsendgerät gehaltenen Ursprungs-Kommunikationsendgerät und sekundär zu dem durch dieses Ursprungs-Kommunikationsendgerät seinerseits gehaltenen Endgerät bzw. Amtssatz in den Fällen, in denen das Ursprungs-Kommunikationsendgerät in den Ruhebetriebszustand übergegangen ist. Letzteres wäre beispielsweise der Fall, wenn der betreffende Teilnehmer auflegt. Der von diesem Teilnehmer ursprünglich selbst gehaltene Teilnehmer bleibt in der aufgebauten Verbindungskette. Dies wird durch die entsprechende Position in dem betreffenden Verbindungsspeicher festgelegt. Aufgrund der Betätigung der Funktionssondertaste wird dann durch die zentrale Anlagensteuerung die Verbindung dieses Endgerätes mit dem gehaltenen Endgerät bzw. Amtssatz bewirkt.

Weitere vorteilhafte Ausgestaltungen der Erfindung sind den restlichen Unteransprüchen zu entnehmen.

Die Erfindung wird im folgenden anhand eines schematisch dargestellten Ausführungsbeispiels erläutert.

Dabei zeigt
- FIG 1: die logische Verbindung einer besonderen Gerätekonstellation im Zusammenhang mit grundsätzlichen Schaltungskomponenten einer digitalen Kommunikationsanlage,
- FIG 2: die Basisstruktur der Steuerung einer solchen digitalen Kommunikationsanlage,
- FIG 3 a bis e: die Struktur der dynamischen Speicher bei unterschiedlichen vermittlungstechnischen Zuständen der beteiligten Teilnehmer, und
- FIG 4: ein Diagramm mit den, insbesondere auf die Endgeräte der besonderen Endgerätekonstellation bezogenen Meldungsschritten.

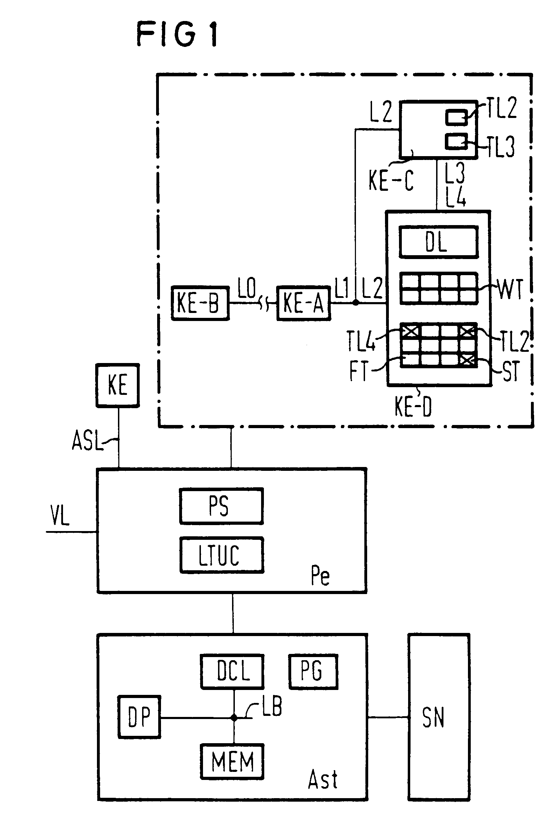

Zentraler Bestandteil der in der FIG 1 schematisch dargestellten digitalen Kommunikationsanlage ist ein Koppelfeld SN, über das Kommunikationsendgeräte - schematisch angedeutet durch die Endgeräte KE, KE-A...KE-D - miteinander bzw. mit zu einer öffentlichen Vermittlungsanlage oder zu anderen Nebenstellenanlagen führenden Leitungen VL verbindbar sind. Das zentrale Koppelfeld SN steht unter dem Steuereinfluß einer zentralen Anlagensteuerung ASt, das die hierarchisch oberste Strukturebene der Kommunikationsanlage darstellt. Diese Strukturebene wird durch einen zentralen Steuerprozessor DP gebildet, der das Zusammenwirken aller Bausteine und Module der Kommunikationsanlage koordiniert. Neben einer takterzeugenden Einrichtung PG ist die Anlagensteuerung weiterhin mit einer vorgeschalteten Zugangssteuerung DCL und einem Speicher MEM ausgestattet. Die Einheit DCL dient als Schnittstelle zu Peripherie, die als "Master" einer HDLC-Verbindung die Protokollbehandlung auf dem Signalisierungskanal durchführt. In dem Speicher MEM sind beispielsweise die vermittlungstechnische Datenbasis und alle vermittlungstechnisch relevanten Programme und die dazugehörigen Daten abgespeichert. Wesentliche Funktionen des zentralen Steuerprozessors DP sind also die Speicherung und anforderungsgerechte Abarbeitung von vermittlungstechnischen Programmen und die Steuerung und Überwachung des lokalen Busses LB. An diesen sind peripheriezugewandt die Einheiten DCL und das Koppelfeld SN angeschlossen. Zusätzliche übliche Funktionen des zentralen Datenprozessors DP sind beispielsweise betriebstechnische Abwicklungen und sicherheitstechnische Anzeigen.

Wesentlicher Bestandteil der Peripherie Pe sind periphere Schnittstellen PS, denen eine Schnittstellensteuerung LTUC zugeordnet ist. Diese steuert den Verbindungsaufbau zwischen den Kommunikationsendgeräten KE, wobei hierfür ein programmtechnisch realisiertes Verbindungsaufbauverfahren vorgesehen ist. In den Schnittstellen PS sind die mit den Kommunikationsendgeräten KE, die Signalisierungsprotokolle abwickelnden Verfahren bzw. Programmodule vorwiegend realisiert. Die der Berechtigungsprüfung hinsichtlich Dienste, Leistungsmerkmalen, usw. sowie der Verbindungssteuerung über das digitale zentrale Koppelfeld SN dienenden Verbindungsaufbauverfahren bzw. Programmodule sind in der zentralen Anlagensteuerung ASt implementiert.

An die Kommunikationsanlage können neben digitalen Kommunikationsendgeräten auch herkömmliche Endgeräte mit analoger übertragung jeweils über eine Anschlußleitung ASL angeschlossen werden. Dies erfolgt für eine jede periphere Schnittstelle PS für die digitalen Kommunikationsendgeräte über eine nicht dargestellte und die entsprechende digitale Informationsübertragung beherrschende Satzbaugruppe und für die analogen Kommunikationsendgeräte durch eine gleichfalls nicht dargestellte und entsprechend angepaßte Satzbaugruppe. Diese Satzbaugruppen sind für jede Schnittstelle PS mehrfach vorhanden und dienen u. a. dazu, die unterschiedlichen Signalisierungsinformationen von den einzelnen Endgeräten auf ein innerhalb der Kommunikationsanlage einheitlich verwendetes Format umzuwandeln. An jeder Satzbaugruppe sind jeweils eine Mehrzahl von Leitungsanschlüssen zugänglich.

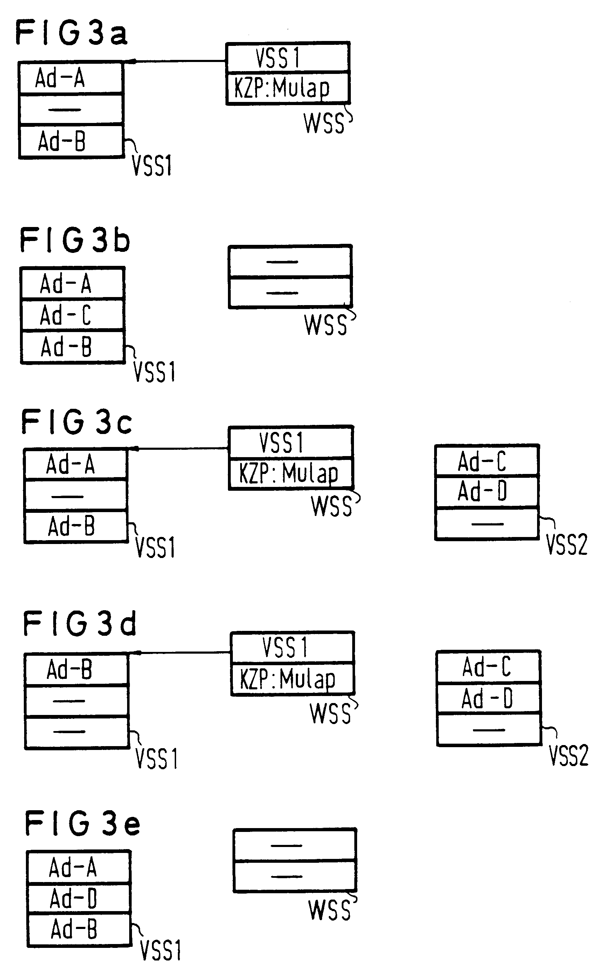

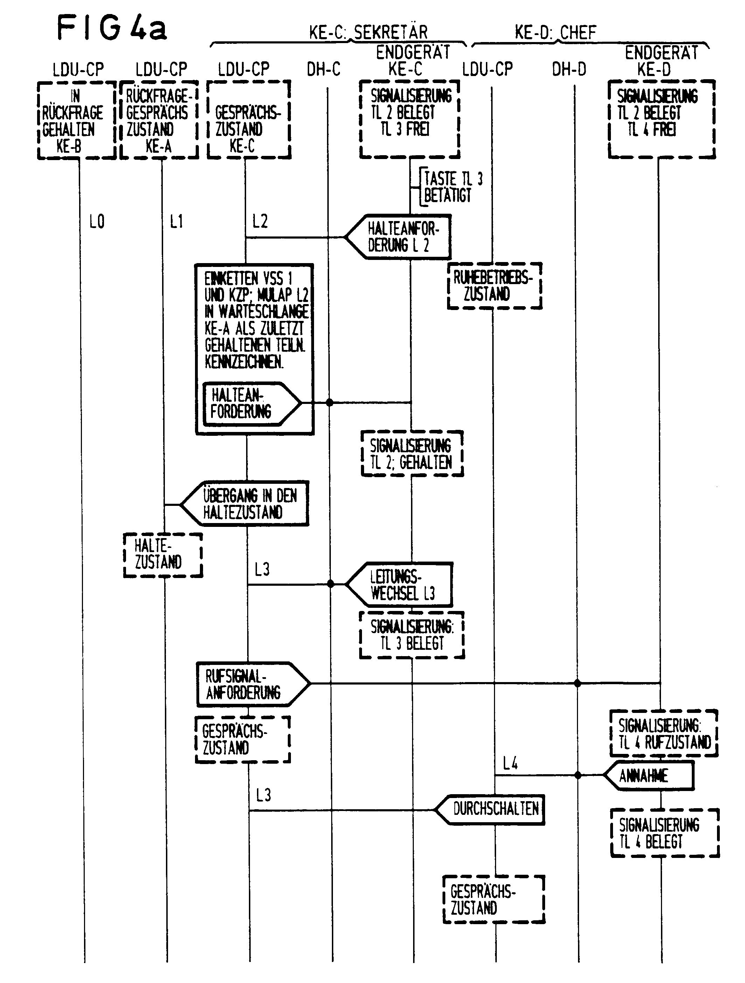

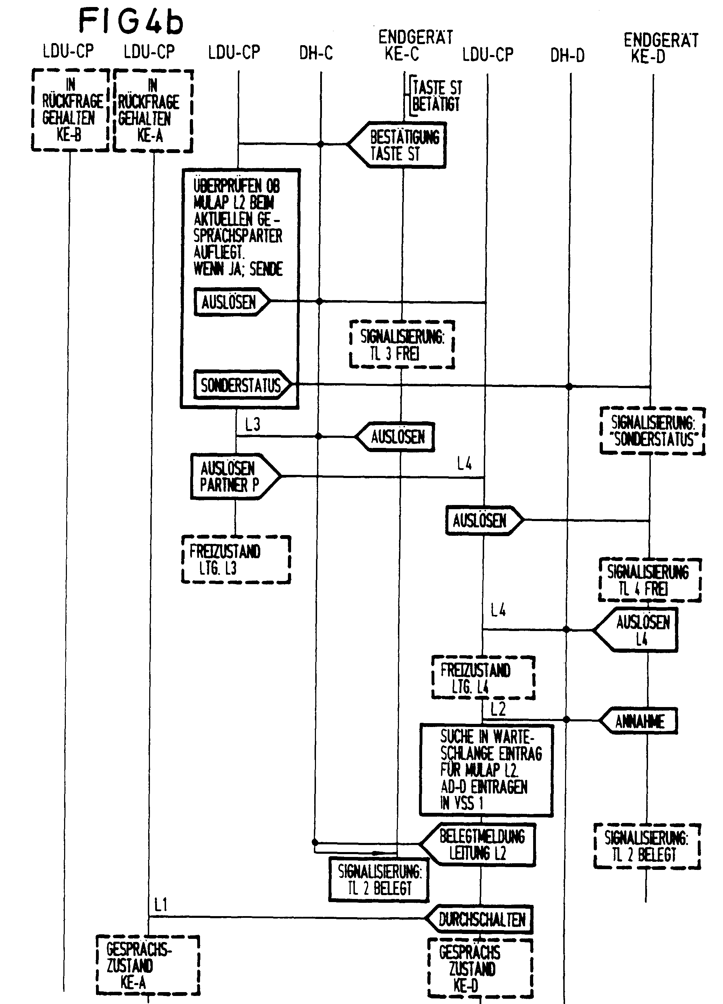

In der FIG 1 sind noch weitere Kommunikationsendgeräte KE-A... KE-D angedeutet, die jeweils über eine z. B. zweiadrige Anschlußleitung in gleicher Weise wie das Kommunikationsendgerät KE, angeschlossen sind. Es können jedoch, wie in dem logischen Verbindungsplan in der FIG 1 innerhalb der durch die strichlierte Umrandung vorgegebenen Feld für diese betreffenden Geräte angedeutet ist, softwaremäßig mehrere Leitungen L0...L4 definiert sein, denen jeweils an den Endgeräten z. B. eine diesbezügliche leitungsbelegende Taste zugeordnet ist. Dies ist beispielsweise für die Kommunikationsendgeräte KE-C und KE-D durch die Tasten TL2 und TL3 bzw. TL2 und TL4 symbolisch angedeutet. Diese Tasten können zu einem Satz von Funktionstasten FT gehören, mit denen neben einer Wähltastatur WT ein jedes zumindest digitales Endgerät KE-C bzw. KE-D ausgestattet ist. Diese beiden Endgeräte KE-C und KE-D können beispielsweise zu einer Gruppe von angeschlossenen Endgeräten gehören, für die Funktionen realisiert sind, die normalerweise sogenannten Reihenanlagen zugeordnet sind. Diese werden üblicherweise als Key-Leistungsmerkmale bezeichnet. Dies bedeutet u.a., daß Verbindungen unmittelbar durch die Betätigung von leitungsbelegenden Tasten aufgebaut werden können und daß die Vermittlungszustände der übrigen zu dieser speziellen Gruppe gehörenden Endgeräte an dem betreffenden Endgerät signalisiert werden. Im Ausführungsbeispiel sollen die Endgeräte KE-C und KE-D Chef-/Sekretär-Teilnehmerstellen sein. Es wird zwischen diesen beiden Endgeräten durch die Betätigung der Taste TL3 am Endgerät KE-C bzw. TL4 am Endgerät KE-D, das beispielsweise das Chef-Endgerät darstellt, ein vollständiger Verbindungsaufbau zu dem jeweils anderen Endgerät durchgeführt. Weiterhin soll bei einer Verbindungsanforderung zu dem Endgerät KE-D diese Tatsache sowohl an diesem Endgerät als auch an dem in dieser besonderen Konstellation zu diesem Endgerät stehenden anderen Endgerät KE-C signalisiert werden. Diese Signalisierung kann an jedem Endgerät in unterschiedlicher Weise erfolgen. So könnte beispielsweise am Endgerät KE-D die der Pseudoleitung L2 zugeordnete Taste TL2 leuchten und am Endgerät KE-C könnte neben der Aktivierung der Leuchtanzeige zusätzlich ein akustischer Ruf erfolgen. Diese Pseudoleitung L2 liegt demnach an den beiden Endgeräten auf. Dies könnte grundsätzlich auch noch an weiteren Endgeräten der Fall sein. Eine Verbindungsanforderung, die voraussetzungsgemäß an allen Endgeräten der Gruppe signalisiert wird, kann bestimmungsgemäß an einem Endgerät, beispielsweise an dem der Sekretär-Teilnehmerstelle zugeordneten Endgerät KE-C, angenommen werden. Die weiteren Vermittlungsmöglichkeiten für die in der FIG 1 angedeutete Verbindungskette werden im Zusammenhang mit den nachfolgenden FIGUREN, insbesondere im Zusammenhang mit den FIG 3 und 4, näher erläutert. Durch die in der FIG 1 gewählte Symbolik soll angedeutet werden, daß zunächst zwischen den Endgeräten KE-A und dem Endgerät KE-B eine Verbindung bestand, die durch den Kommunikationsendgeräteteilnehmer A in den Haltezustand übergeführt wurde, da er eine Rückfrageverbindung zu dem Endgerät KE-D über die - wie bereits geschildert - an beiden Endgeräten der Endgerätekonstellation aufliegenden Leitung L2 aufgebaut hat. Eine solche mehrfach aufliegende Leitung wird in der Fachwelt als "MULAP"-Leitung (Multi Line Appearance) bezeichnet.

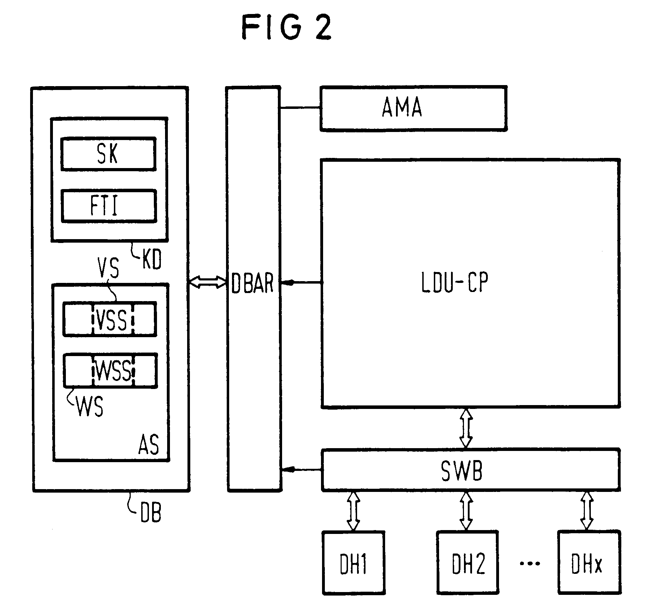

Die in der FIG 2 dargestellte Basissteuerstruktur einer digitalen Kommunikationsanlage weist zwei Steuerstrukturebenen auf, von denen die eine mittels jeweils an eine Kommunikationsendgeräteart angepaßten Leitungstechnik-Programmodulen DH1, DH2...DHx der Steuerung peripherer Geräte dient. Zu diesen zählen nicht nur an die Peripherie angeschlossene Kommunikationsendgeräte KE, sondern auch zentrale schaltungstechnische Einrichtungen, wie Anschaltesätze und Koppelfeld. Die Leitungstechnik-Programmodule DH sind kommunikationsendgeräteartenspezifisch so ausgebildet, daß sie jeweils das Signalisierungsverfahren und die Benutzeroberfläche der entsprechenden Kommunikationsendgeräteart steuern. Jedes dieser Leitungstechnik-Programmodule bietet eine systemeinheitliche Schnittstelle zu der anderen Strukturebene, nämlich der Vermittlungstechnik-Strukturebene. Diese ist durch ein Programmmodul LDU-CP (Logical Device Unit-Call Processing) repräsentiert. Der Informationsaustausch zwischen der Leitungstechnik-Strukturebene und der Vermittlungstechnik-Strukturebene erfolgt mittels allgemeingültig definierter Meldungen, die über eine Software-Busstruktur SWB übertragen werden. Diese kann als integraler Bestandteil des Betriebssystems der zentralen Anlagensteuerung angesehen werden. Die Aufgaben des Vermittlungsprozedur-Programmoduls LDU-CP umfassen beispielsweise die für die Steuerung des Verbindungsaufbaus und des Verbindungsabbaus notwendigen Prozesse innerhalb der gesamten Vermittlungsprozedur. So werden z. B. Berechtigungen geprüft, Wahlkontrollen durchgeführt, es erfolgt eine Signalisierung von vermittlungstechnischen Zuständen zwischen den Kommunikationsendgeräten und es wird ein Aktivieren und ein Deaktivieren von Vermittlungstechnik-Leistungsmerkmalen aus den verschiedenen vermittlungstechnischen Zuständen heraus ermöglicht.

Das Vermittlungsprozedur-Programmodul LDU-CP, die Leitungstechnik-Programmodule DH1, DH2...DHx und der Softwarebus SWB haben mittels Datenbasis-Zugriffsroutinen DBAR Zugang zur Datenbasis DB der Kommunikationsanlage. Neben dem Vermittlungsprozedur-Programmodul sind weitere Module vorgesehen, von denen mit AMA beispielhaft die Betriebstechnik-Programmodule angedeutet sind. Diese dienen zur Abwicklung von betriebstechnischen Aufgaben. Zumindest einem Teil von ihnen ist gleichfalls über definierte Datenbasis-Zugriffsroutinen die Datenbasis DB zugänglich.

Die Datenbasis DB, die z. B. dem Speicher MEM der Anlagensteuerung zugeordnet ist, enthält Permanentspeicher. Im Speicherbereich KD sind beispielsweise als permanente Daten die Systemkonfigurationsdaten SK abgespeichert. Grundsätzlich wird bei jedem Einleiten einer Verbindungsaufbauprozedur durch ein Kommunikationsendgerät in diesem Kundendatenspeicher KD der Datenbasis ein dem jeweiligen Gerät zugeordneter Speicherbereich abgefragt. Im Rahmen dieser Abfrage wird das rufende Kommunikationsendgerät eindeutig identifiziert. Die darin abgespeicherten Dienste und Berechtigungen hinsichtlich benutzbarer Leistungsmerkmale werden gelesen und gegebenenfalls in einem dynamische Daten speichernden Speicherbereich AS der Datenbasis gespeichert. Gleichzeitig werden die darin enthaltenen physikalischen Funktionen, wie z. B. die verwendeten Endgeräteschnittstellen, gelesen und gespeichert. Diese Daten werden im Laufe des Verbindungsaufbaus und bei Einleiten vermittlungstechnischer Prozeduren bewertet bzw. abgefragt. Weiterhin sind im Permanentspeicherbereich KD Informationen u.a. bezüglich der leitungsbelegenden Funktionstasten enthalten. Eine Funktionstaste stellt auch die erfindungsgemäß eingesetzte Sonderfunktionstaste ST dar, die am Endgerät KE-C vorhanden ist und deren Bedeutung später noch beschrieben wird. In dem Permanentspeicherbereich FTI sind beispielsweise die Tastenidentifikationsdaten gespeichert. Weiterhin sind darin diejenigen Vermittlungsinformationen enthalten, denen die aufgrund der Tastenbetätigung einzuleitenden vermittlungstechnischen Prozeduren entnehmbar sind. Vorab werden die abgespeicherten Tastenidentifikationsdaten mit denjenigen Daten verglichen, die durch die Betätigung einer Funktionstaste im jeweiligen Kommunikationsendgerät gebildet und an die Kommunikationsanlage übermittelt wurden. Durch die Betätigung einer solchen Taste an einem Kommunikationsendgerät, dem die sogenannten Key-Funktionen zugeordnet sind, kann also durch die Kommunikationsanlage direkt die eigene Anschlußleitung belegt werden; es kann das Gerät mit einer an die Kommunikationsanlage angeschlossenen Amtsleitung verbunden oder ein Verbindungsaufbau zu einem anderen internen Kommunikationsendgerät durchgeführt werden.

In dem für die endgerätebezogenen Informationen vorgesehenen Permanentspeicherbereich KD ist demnach eingetragen, daß die besondere Chef-Sekretär-Endgerätekonstellation KE-C und KE-D über die sogenannte "MULAP"-Leitung L2 angewählt wird. Diese gespeicherten Informationen ergeben dann gleichzeitig einen Hinweis auf die daran angekoppelten vermittlungstechnischen Prozeduren. In diesem speziellen Fall bedeutet dies u. a., daß eine ankommende Verbindung an beiden Endgeräten - wie bereits erwähnt - signalisiert wird.

Für dynamische Daten ist in der Datenbasis DB der Speicherbereich AS vorgesehen, wobei dieser Speicherbereich einen Arbeitsspeicher der Speicheranordnung MEM der Anlagensteuerung ASt darstellen kann. Bei jeder ankommenden Verbindung oder bei jedem Verbindungsaufbau wird ein dynamisches Speicherelement VSS eines Verbindungsspeichers VS der Verbindung zugeordnet. Im Zusammenhang mit dem Verbindungsaufbau werden auch noch weitere Speicherelemente VSS herangezogen, die als sogenannte Warteschlangenelemente eines Warteschlangenspeichers WS dienen.

Um den Programmieraufwand u. a. für die Verwaltung dieser Verbindungs- und Warteschlangenspeicher zu minimieren, ist vorgesehen, daß in dem Verbindungsspeicher lediglich drei endgerätebezogene Einträge maximal aufgenommen werden. Es ist beispielsweise eine Kennung für die an einer Gesprächsverbindung aktuell beteiligten Endgeräte bzw. Endgeräteteilnehmer und die Kennung eines im Haltezustand befindlichen weiteren Teilnehmers vorgesehen. Diese Kennung kann jeweils auf ein spezielle Informationen enthaltendes Gerätespeicherelement verweisen.

Für die in der FIG 1 innerhalb des gestrichelt angedeuteten Feldes angegebene Verbindungssituation zwischen insgesamt vier Endgeräten sind die durch die Anlagensteuerung in die Speicherelemente VSS und WSS jeweils eingeschriebenen Informationen in den FIG 3 a bis 3 d strukturell dargestellt. Es wird davon ausgegangen, daß durch den Teilnehmer A vom Endgerät KE-A aus eine Verbindung zum Teilnehmer B bestand. Diese Verbindung wurde durch den Teilnehmer A in den Haltezustand übergeführt. Dies kann beispielsweise selbsttätig dann erfolgen, wenn der Teilnehmer A aus der Gesprächsverbindung heraus eine Rückfrageverbindung zu einem anderen Teilnehmer aufbaut. Dies sei beispielsweise der Teilnehmer D, der über die "MULAP"-Leitung L2 erreicht wird. In dem dieser ersten Verbindung zugeordneten Verbindungsspeicherelement VSS1 sind für den Aktivteilnehmer A gemäß FIG 3 a die Adreßinformation Ad-A und die Adreßinformation Ad-B für den gehaltenen Teilnehmer B eingetragen. Die Tatsache, daß der Teilnehmer B sich in einem Haltezustand befindet, wird im Verbindungsspeicherelement durch den speziellen Speicherplatz (dritte Speicherplatzstelle) definiert.

Immer wenn ein rufender Teilnehmer versucht, eine Verbindung zu einem Zielteilnehmer herzustellen, werden Informationen in ein Element WSS eines Warteschlangenspeichers WS eingeschrieben. In diesem speziellen Fall, in dem der Teilnehmer A den Teilnehmer D ruft, ist in diesem Element WSS die Adresse des Verbindungsspeichers VSS1 und ein Kennzahlpunkt KZP:MULAP eingetragen. Ein solcher Kennzahlpunkt ist als Kennung für jedes anzuwählende "Gerät" festgelegt. Eine solche Kennung ist also für jedes einzelne Endgerät, für einen jeden Amtssatz und für eine Personensucheinrichtung und auch für die sogenannte "MULAP"-Leitung definiert. Unter dieser letztgenannten "MULAP"-Leitung verbergen sich also - wie bereit erwähnt - mehrere Teilnehmer. Wird der Verbindungswunsch vom Teilnehmer A, der für den Teilnehmer D bestimmt ist, aufgrund der Chef-/Sekretär-Konstellation von dem Sekretär-Kommunikationsendgerät C angenommen, so werden in das Verbindungsspeicherelement VSS1 die Informationen gemäß FIG 3 b eingeschrieben. An zweiter Stelle ist also die Adreßinformation Ad-C für den aktuellen Gesprächspartner C eingetragen. Es ist also die Verbindung tatsächlich hergestellt, so daß die Warteschlangeninformationen gelöscht werden.

Die Information darüber, in welchen Verbindungsspeicher die Adreßinformation für den Teilnehmer C einzutragen ist, ergibt sich durch die Einträge im Warteschlangenspeicherelement WSS. Die einzelnen Warteschlangenelemente werden nach dem Kennzahlpunkt "MULAP" abgefragt. Ist dieser Kennzahlpunkt in einem Element gefunden, so ergibt sich damit gleichzeitig die Adresse des zugehörigen Verbindungsspeichers VSS1, in dem die endgerätebezogenen Informationen bereits eintragen sind oder eingetragen werden müssen. In diesem speziellen Fall betrifft dies gemäß FIG 3 b den Eintrag für den Teilnehmer C.

In der FIG 3 c ist die Situation dargestellt, in der der Teilnehmer C in einer Gesprächsverbindung mit dem Teilnehmer D steht. Der Aufbau dieser Gesprächsverbindung kann beispielsweise durch die Betätigung der Taste TL3 vorgenommen werden. Aufgrund der übermittelten Tastenidentifikationsinformationen werden die entsprechenden vermittlungstechnischen Informationen aus dem Permanentspeicher KD der Datenbasis ausgelesen und die Verbindung hergestellt. Die aktuellen Gesprächspartner C und D werden in einem separaten Verbindungsspeicher VSS2 eingetragen. Der Verbindungsspeicher VSS1 weist die gerade bezogenen Einträge für die Gesprächsverbindung auf, die den Ausgang für diese Verbindungskette bildete. Mit dem durch den Leitungswechsel auf die Leitung L3 erfolgenden Verbindungsaufbau zwischen den Teilnehmern C und D wurde voraussetzungsgemäß der Teilnehmer A in den Wartezustand übergeführt. Die im Verbindungsspeicherelement VSS1 enthaltenen Einträge betreffen also ausschließlich gehaltene Teilnehmer. Um dies zu dokumentieren, nimmt das Warteschlangenspeicherelement WSS1 eine bestimmte Lage innerhalb des gesamten Warteschlangenspeicherbereiches ein. Es ist nämlich dann Teil eines Speicherabschnittes, in dem ausschließlich Informationen gespeichert werden, die gehaltene Verbindungen betreffen. Diese durch den Teilnehmer C zuletzt gehaltene Verbindung mit dem Teilnehmer A kann aufgrund der Einträge im Warteschlangenspeicherelement WSS1 wieder herangezogen werden. Wird der eigene Kennzahlpunkt beim Durchsuchen der einzelnen Warteschlangenelemente gefunden, so ist daraus wiederum aufgrund des entsprechenden Adresseneintrages in dem betreffenden Warteschlangenspeicherelement das für eine gewünschte Rücknahme der ursprünglichen Verbindung zuständige Verbindungsspeicherelement VSS1 entnehmbar. Die Hinweise über die ursprüngliche Verbindung wurden gewissermaßen in eine Warteschlange eingekettet.

Die FIG 3 d zeigt die Situation, bei der der Teilnehmer C in gleicher Weise wie in FIG 3 c mit dem Teilnehmer D auf der anderen "Pseudoleitung" L3-L4 spricht, wobei jedoch vorausgesetzt wird, daß der Teilnehmer A aufgelegt hat und somit ausgelöst wurde. Im Verbindungsspeicherelement VSS1 ist somit lediglich nur noch als zu vermittelnder Partner der Teilnehmer B adressenmäßig, z. B. durch die Adresse des zugehörigen Gerätespeicherelementes, abgespeichert.

Es wird nun angenommen, daß ausgehend von der in FIG 3 c dargestellten Situation der Teilnehmer C die spezielle Sonderfunktionstaste ST betätigt. Mit der Betätigung dieser speziellen Taste werden dann die in FIG 4 dargestellten Abläufe bzw. Meldungen initiiert. Im Endgerät führen diese dann dazu, daß der Teilnehmer D, beispielsweise ein Chef-Teilnehmer, ohne irgendwelche Aktivitäten mit dem zuletztgehaltenen Teilnehmer A durchverbunden wird. Diese automatische Verbindungsherstellung erfolgt also durch das Zuteilen des zuletztgehaltenen Teilnehmers, in diesem speziellen Falle des Teilnehmers A. Damit wird durch dieses Zuteilen letztendlich eine Situation erreicht, wie sie auch über eine echte, sogenannte zweite Rückfrage zu erzielen wäre. Diese echte zweite Rückfrage, die eine Erweiterung des Verbindungsspeicherelementes um mindestens einen Platz erfordert hätte, wird also erfindungsgemäß durch eine alternative Lösung ersetzt. Diese führt zwar zu dem gleichen Endergebnis, es können aber die bereits implementierten Grundfunktionen in der Behandlung der Verbindungsspeichereinträge beibehalten werden. Obwohl also in der beschriebenen Kette von einzelnen Verbindungen insgesamt vier Endgeräte beteiligt sind, nehmen die Verbindungsspeicherelemente Informationen auf, die höchstens auf drei Endgeräte bezogen sind. Diese betreffen z. B. die Informationen über zwei in einer aktuellen Gesprächsverbindung stehenden Endgeräte sowie über einen gehaltenen Teilnehmer. Es können somit die bereits implementierten Prozeduren für das Einschreiben und für die Verwaltung dieser Einträge, die auch sich ändernde vermittlungstechnische Zustände dieser Endgeräte berücksichtigen, verwendet werden.

Mit der Betätigung der Sonderfunktionstaste ST durch den Teilnehmer C wird die Löschung der Einträge im Verbindungsspeicherelement VSS2 veranlaßt. Durch die Steuerung wird bewirkt, daß im Warteschlangenspeicher WS mit dem der Kennung des Teilnehmers C (Sekretär-Endgerät) bzw. mit dem als Kennung für die "MULAP"-Leitung L2 verwendeten Kennzahlpunkt KZP:MULAP nach dem entsprechenden Eintrag gesucht wird. Ist dieser damit übereinstimmende Eintrag gefunden, so ist damit gleichzeitig die Adresse des Verbindungsspeicherelementes VSS1 bekannt, das für die aufzubauende Verbindung heranzuziehen ist. In dieses Verbindungsspeicherelement wird - wie in der FIG 3 c dargestellt ist - an zweiter Stelle die Adreßinformation Ad-O für das Endgerät KE-D des Teilnehmers D eingetragen. Gleichzeitig wird das Warteschlangenelement WSS gelöscht. Das zentrale Koppelfeld SN wird daraufhin veranlaßt, die Verbindung zwischen dem Endgerät KE-D und dem Endgerät KE-A des gehaltenen Teilnehmers A herzustellen.

In der FIG 4 sind in bezug auf die Endgeräte, insbesondere auf die Endgeräte KE-C und KE-D, die Meldungen dargestellt, die in der vermittlungstechnischen Strukturebene LDU-CP generiert werden und es sind weiterhin die vermittlungstechnischen Zustände der einzelnen Endgeräte definiert. Weiterhin sind die an den Endgeräten KE-C und KE-D vorgenommenen Signalisierungen und die in diesen Endgeräten erzeugten und der vermittlungstechnischen Strukturebene übermittelten Meldungen dargestellt.

In FIG 4 a wird zunächst davon ausgegangen, daß ein Teilnehmer A sich in einer Gesprächsverbindung mit einem Teilnehmer B befand. In Zusammenhang mit einer Rückfrage des Teilnehmers A wurde der Teilnehmer B in einen Haltezustand übergeführt. Der Teilnehmer A wählt in Rückfrage die "MULAP"-Leitung L2 an, die - wie bereits erläutert - am Endgerät KE-C und am Endgerät KE-D aufliegt. Diese beiden Endgeräte können beispielsweise in einer Chef-/Sekretär-Konstellation zueinander stehen. Es wird weiterhin vorausgesetzt, daß das Rückfragegespräch durch das Endgerät KE-C angenommen wurde. An diesem Endgerät wird also die Leitung L2 belegt und die Leitung L3 als frei signalisiert. Am Endgerät KE-D wird die Leitung L2 als belegt und die Leitung L4 als frei signalisiert. Dieses Endgerät befindet sich im Ruhezustand. Während des Gesprächszustandes zwischen dem Teilnehmer C und dem Teilnehmer A wird nun die der Leitung L3 zugeordnete Taste TL3 betätigt. Daraus wird eine Meldung abgeleitet, die das Vermittlungsprozedur-Programmodul veranlaßt, die Leitung L2, d. h. den Teilnehmer A, in den Haltezustand überzuführen. Es wird die Einkettung des Verbindungsspeichers VSS1 (FIG 3) und der "MULAP"-Leitung L2 in das Warteschlangenspeicherelement VSS1 sowie die Kennzeichnung des Teilnehmers A als zuletzt gehaltener Teilnehmer vorgenommen. Die Vermittlungstechnik generiert eine Halteanforderung. Daraufhin wird am Endgerät KE-C die Leitung L2 als gehaltene Leitung signalisiert und es erfolgt eine Meldung, die den Übergang in den Haltezustand für den Teilnehmer A bewirkt. Die im Endgerät KE-C gebildete Anforderung für den Leitungswechsel zu der die Verbindung zum Teilnehmer D ermöglichenden "Software"-Leitung L3 führt dann unter Einbeziehung des Leitungstechnik-Programmoduls DH-C zu dem Verbindungsherstellungsversuch über die für die Interkommunikation zwischen Teilnehmer C und Teilnehmer D vorgesehene "Leitung" L3. Durch eine entsprechende Charakterisierung in dem Permanentspeicher KD der Datenbasis DB (FIG 2) kann automatisch eine Wahlinformation für die Verbindungsanforderung mit dem Teilnehmer D erzeugt werden. Am Endgerät KE-C wird die in Form einer Leitungstaste TL3 vergegenständlichte Leitung L3 als belegt gekennzeichnet. Aus der vermittlungstechnischen Strukturebene erfolgt die Anforderung für die Anschaltung der Rufsignale für das Endgerät KE-D. An diesem Endgerät wird die Signalisierung bezüglich der "Leitung" L4 derart geändert, daß der Rufzustand angezeigt wird. Aufgrund der im Endgerät erfolgten Meldung über die Verbindungsannahme, die über das Leitungstechnik-Programmodul DH-D dem vermittlungstechnischen Modul zugeleitet wird, erfolgt eine Meldung, die das Durchschalten der Verbindung zwischen L3 und L4 nach sich zieht. Es besteht somit eine Verbindung zwischen den Endgeräten KE-C und KE-D. L4 wird am Endgerät KE-D als belegt signalisiert. Die Meldung "Durchschalten" bewirkt gleichzeitig, daß für das Endgerät KE-C der bis dahin angelegte Freiton abgeschaltet wird.

Falls die erwähnte Generierung der Halteanforderung als spezielle Halteanforderung in der Art definiert war, daß nur derjenige Teilnehmer, der den Gesprächspartner in den Haltezustand übergeführt hat, diese Verbindung erneut übernehmen kann, so muß dieser spezielle Zustand insofern geändert werden, als ein normaler Haltezustand erzeugt wird. Nur in einem solchen Fall ist eine spätere Zuteilung des gehaltenen Teilnehmers an das Endgerät KE-D möglich.

In der FIG 4 b sind die Meldungen und Signalisierungs- bzw. Leitungszustände dargestellt, die durch die während des Gesprächszustandes zwischen dem Teilnehmer C und dem Teilnehmer D erfolgende Betätigung der Sonderfunktionstaste ST am Endgerät KE-C, also beispielsweise am Sekretär-Gerät, gestartet werden. Die Betätigung dieser Sonderfunktionstaste ST wird über die Leitungstechnik-Strukturebene der Vermittlungstechnik-Strukturebene übermittelt. Daraufhin wird durch eine Überprüfung festgestellt, daß am Endgerät des aktuellen Gesprächspartners D die "MULAP"-Leitung aufliegt. Daraufhin wird sowohl eine Meldung "Auslösen" an das Leitungstechnik-Programmodul DH-C als auch eine Meldung "Sonderstatus L2" an das Leitungstechnik-Programmodul DH-D übermittelt und an das jeweilige Endgerät weitergegeben. Im jeweils zuständigen Leitungstechnik-Programmodul wird dann gegebenenfalls eine Anpassung der einzelnen Meldungen an das für das Endgerät vorgesehene Meldungsformat vorgenommen. Eine derartige Anpassung erfolgt auch für Meldungen, die von einem Endgerät an die vermittlungstechnische Strukturebene zu übermitteln sind.

Mit der Meldung "Auslösen" wird ein Auslösevorgang für die zwischen den Endgeräten KE-C und KE-D bestehende Verbindung eingeleitet. Es wird dabei durch die Meldung "Auslösen" in der umgekehrten Richtung der Leitungstechnik-Strukturebene übermittelt, das das jeweilige Endgerät ausgelöst hat. Diese Meldung kann auch dazu benutzt werden, um Verbindungswege und Töne abzuschalten. Nach den Auslösevorgängen wird der Freizustand für die "Pseudoleitungen" L3 und L4 erreicht und diese Tatsache an den Endgeräten KE-C und KE-D signalisiert. Die Leitung L3 bzw. die Leitung L4 wird somit als "frei" gekennzeichnet. Neben diesen Auslösevorgängen wird gleichzeitig aufgrund der übermittelten speziellen Meldung "Sonderstatus L2" eine Meldung erzeugt, die als "Annahme"-Meldung derjenigen entspricht, die bei einer Rufannahme generiert wird. Dies erfolgt aufgrund des speziellen Zustandes, in dem die "MULAP"-Leitung beim Endgerät KE-D steht und der dem Endgerät als Meldung "Sonderstatus L2" übermittelt wurde. Kommt in diesen speziellen Zustand die Meldung "Auslösen Partner D", so wird zwar die aktuelle Verbindung L3, L4 ausgelöst, aber es wird gleichzeitig die erwähnte "Annahme-Meldung" bezüglich der Leitung L2 generiert. Am Endgerät KE-D wird die Leitung L2 als belegt signalisiert. Aufgrund der "Annahme-Meldung" wird mit dem Kennzahlpunkt für das Endgerät KE-D, der in seiner Kennzeichnung mit der Kennzeichnung für die "MULAP"-Leitung übereinstimmt, der Warteschlangenspeicher durch die Steuerung nach einem derartigen Eintrag durchsucht. Wird er in dem für gehaltene Verbindungen in dem Warteschlangenspeicher vorgesehenen Abschnitt gefunden, so ist damit auch die darin gleichfalls enthaltene Adresse des Verbindungsspeichers bekannt, in dem die über das betreffende Verbindungsspeicherelement gehaltenen Teilnehmer A und B eingetragen sind (FIG 3). In diesen Speicher wird sodann die Adresseninformation des Endgerätes KE-D zusätzlich eingespeichert (FIG 3 e). Durch das vermittlungstechnische Programmmodul LDU-CP wird eine Meldung "Durchschalten" generiert. Damit wird dann mit Hilfe des betroffenen Leitungstechnik-Programmoduls die Verbindung zwischen dem Endgerät KE-D und dem gehaltenen Endgerät KE-A hergestellt. Die Teilnehmer A und D befinden sich somit im Gesprächszustand. Die Betätigung der Sonderfunktionstaste ST, deren Wirkung als Zuweistaste zu beschreiben ist, wird also bei geringfügiger Erweiterung durch spezielle Programmanteile, die sich im wesentlichen auf die Generierung der Annahmemeldung beziehen, das Gespräch zwischen dem Endgerät KE-D und dem gehaltenen Teilnehmer A vermittelt. Sollte dieser Teilnehmer aufgelegt haben, so erfolgt diese Vermittlung - wie bereits geschildert - zum gleichfalls gehaltenen Teilnehmer B. War das ursprüngliche Gespräch, aus dem heraus der Teilnehmer A eine Rückfrage zum Teilnehmer C vorgenommen hat, eine externe Verbindung, so wird anstelle des internen Teilnehmers B der für diese externe Verbindung herangezogene Amtssatz gehalten werden.

## Patentansprüche

1. Verfahren für den Betrieb einer programmgesteuerten Kommunikationsanlage, an die Kommunikationsendgeräte angeschlossen sind, die Leitungs- und/oder Funktionstasten aufweisen, durch deren Betätigung vermittlungstechnische Prozeduren und Verbindungsaufbauprozeduren einleitbar sind, wobei die diese Prozeduren einleitende und steuernde Informationen sowie die Tasten-Identifikationsinformationen in den einer Taste jeweils zugeordneten Speicherbereichen der Datenbasis, auf die die zentrale Anlagensteuerung zugreift, enthalten sind und innerhalb der Datenbasis gerätebezogene Informationen unter anderem über Anschlußkonstellationen, Berechtigungen und Dienste und Informationen über physikalische Funktionen, wie beispielsweise die Art der Schnittstellen, abgespeichert sind und wobei als solch eine Gerätekonstellation mindestens eine aus wenigstens einem ersten Kommunikationsendgerät und einem zweiten Kommunikationsendgerät bestehende Gruppe vorgesehen ist, und eine für das erste Kommunikationendgerät adressierte ankommende Verbindung gleichzeitig sowohl am ersten als auch am zweiten Kommunikationsendgeräte, vorzugsweise in unterschiedlicher Art, signalisiert wird, wobei in dynamisch zuzuordnenden Speicherabschnitten eines Arbeitsspeichers, die als Verbindungsspeicherelemente und Warteschlangenspeicherelemente dienen, verbindungsindividuelle Informationen sowohl während des Verbindungsaufbaus als auch bei einer bestehenden Verbindung durch die zentrale Anlagensteuerung eingespeichert und ausgelesen werden, **dadurch gekennzeichnet**, daß in den Fällen, in denen die an den beiden Kommunikationsendgeräten (KE-D, KE-C) signalisierte ankommende Verbindung von dem zweiten Endgerät (Sekretär-Teilnehmer KE-C) zunächst angenommen und anschließend in einen Haltezustand übergeführt wurde, von diesem Endgerät (KE-C) zu dem ersten Kommunikationsendgerät (KE-D) unter Heranziehung eines von der bereits vorab bestehenden Verbindung unabhängigen Verbindungsspeicherelementes eine Verbindungsherstellung bewirkt wurde, durch die Betätigung einer Sonderfunktionstaste ST aufgrund der damit zur Kommunikationsanlage übermittelten Tastenidentifikationsinformation und aufgrund der daraufhin aus dem zugeordneten Speicherbereich (KD) der Datenbasis (DB) ausgelesenen vermittlungstechnischen Prozeduren durch die zentrale Anlagensteuerung (ASt) sowohl die Auslösung der zwischen dem ersten (KE-D) und dem zweiten (KE-C) Kommunikationsendgerät bestehenden Verbindung als auch gleichzeitig die Übermittlung einer besonderen Signalisierungsinformation über den Signalisierungskanal zu dem ersten Kommunikationsendgerät veranlaßt wird, daß diese besondere Signalisierungsinformation automatisch eine der Rufannahme entsprechenden Meldung erzeugt und damit die Verbindungsaufbauprozedur einleitet und das Durchschalten des ersten Kommunikationsendgerätes (KE-D) zu dem in den Haltezustand übergeführten Kommunikationsendgerät (KE-A) bewirkt wird.

2. Verfahren für den Betrieb einer programmgesteuerten Kommunikationsanlage nach Anspruch 1, **dadurch gekennzeichnet**, daß die von dem zweiten (KE-C), zusammen mit mindestens einem weiteren Endgerät (KE-D) eine besondere Endgerätekonstellation bildenden Kommunikationsendgerät angenommene Verbindung von einem internen Kommunikationsendgerät (KE-A) als Rückfragegespräch aufgebaut wird, daß demnach vorab das Partner-Kommunikationsendgerät (KE-B) bei einer ursprünglich bestehenden internen Gesprächsverbindung bzw. ein Amtssatz bei einer ursprünglich bestehenden externen Gesprächsverbindung von diesem Ursprungs-Kommunikationsendgerät (KE-A) in den Haltezustand übergeführt wurde.

3. Verfahren für den Betrieb einer programmgesteuerten Kommunikationsanlage nach Anspruch 2,
**dadurch gekennzeichnet,**
daß primär die Durchschaltung des ersten Kommunikationsendgerätes (KE-D) der besonderen Gerätekonstellation zu dem durch das zweite Kommunikationsendgerät (KE-C) gehaltenen Ursprungs-Kommunikationsendgerät (KE-A) erfolgt und sekundär zu dem durch dieses Ursprungs-Kommunikationsendgerät gehaltenen Endgerät (KE-B) bzw. Amtssatz in den Fällen erfolgt, in denen das Ursprungs-Kommunikationsendgerät (KE-A) in den Ruhebetriebszustand übergegangen ist.

4. Verfahren für den Betrieb einer programmgesteuerten Kommunikationsanlage nach Anspruch 1,
**dadurch gekennzeichnet,**
daß die Verbindungsdurchschaltung zu dem gehaltenen Kommunikationsendgerät (KE-A) bzw. Amtssatz an den Kommunikationsendgeräten (KE-D; KE-C) der besonderen Gerätekonstellation durch eine bestimmte optische und/oder akustische Signalisierung angezeigt wird, die sich von der für andere vermittlungstechnische Zustände dieser Kommunikationsendgeräte vorgesehenen Signalisierung unterscheidet.

5. Verfahren für den Betrieb einer programmgesteuerten Kommunikationsanlage nach einem der vorhergehenden Ansprüche,
**dadurch gekennzeichnet,**
daß bedarfsweise für die Herstellung einer Verbindung zwischen dem ersten und dem zweiten Kommunikationsendgerät der besonderen Gerätekonstellation und für die Herstellung einer Verbindung diese Kommunikationsendgeräte mit einem rufenden Endgerät leitungsbelegende Tasten (TL3, TL4) vorgesehen sind, deren Betätigung den vollständigen Verbindungsaufbau bewirkt, daß eine Signalisierung des jeweiligen Leitungszustandes durch optische Anzeigen erfolgt, die vorzugsweise in diesen Tasten jeweils integriert sind.

6. Verfahren für den Betrieb einer programmgesteuerten Kommunikationsanlage nach einem der vorhergehenden Ansprüche, **dadurch gekennzeichnet**, daß, falls das Ursprungs-Kommunikationsendgerät (KE-A) der von dem zweiten Kommunikationsendgerät (KE-C) der besonderen Gerätekonstellation angenommenen Verbindung in einem speziellen Haltezustand (exclusive hold), der ausschließlich die Rücknahme dieser Verbindung durch dieses zweite Kommunikationsendgerät zuläßt, übergeführt wurde, durch die zentrale Anlagensteuerung aufgrund der vorgenommenen Verbindungsherstellung zwischen dem ersten und dem zweiten Kommunikationsendgerät die Umwandlung des genannten speziellen Haltezustandes in einem normalen Haltezustand (common hold) veranlaßt wird, so daß dadurch die Voraussetzung für die Durchschaltung des ersten Kommunikationsendgerätes (KE-D) zu dem in den Haltezustand versetzten Kommunikationsendgerät (KE-A bzw. KE-B) besteht.

7. Verfahren für den Betrieb einer programmgesteuerten Kommunikationsanlage mit einem Speicher, in dem ein verbindungsindividuell zuzuordnender Bereich als Verbindungsspeicher (VS) und als Warteschlangenspeicher (WS) benutzt wird, nach einem der vorhergehenden Ansprüche, **dadurch gekennzeichnet**, daß das verbindungsindividuelle Informationen aufnehmende Element des Verbindungsspeichers (VSS1) auch in den Fällen, in denen das das erste Kommunikationsendgerät der besonderen Gerätekonstellation rufende Endgerät, das seinerseits ein Kommunikationsendgerät, mit dem es in einer Gesprächsverbindung stand, in den Haltezustand übergeführt hat, lediglich Speicherstellen für den Vermittlungszustand bzw. für Kennzeichnungsinformationen für maximal drei Kommunikationsendgeräte umfaßt.

## Claims

1. Method for the operation of a program-controlled communications system to which communications terminals are connected which have line and/or function keys whose actuation enables switching procedures and call set-up procedures to be initiated, the information items which initiate and control these procedures and also the key identification information items being contained in the memory areas of the database accessed by the central system control, which memory areas are respectively assigned to a key, and equipment-related information items regarding, inter alia, connection configurations, authorizations and services and information items regarding physical functions such as, for example, the type of interfaces being stored within the database, and at least one group comprising at least one first communications terminal and one second communications terminal being provided as such a equipment configuration, and an incoming call addressed for the first communications terminal being signalled simultaneously both at the first and at the second communications terminal, preferably in a different manner, call-specific information items being written to and read from memory sections of a main memory, both during the call set-up and during an existing call, by the central system control, which memory sections are to be assigned dynamically and serve as call register elements and queue memory elements, characterized in that in cases where the incoming call signalled at the two communications terminals (KE-D, KE-C) has firstly been accepted by the second terminal (secretary subscriber KE-C) and then been transferred to a hold state, and a call establishment has been effected from this terminal (KE-C) to the first communications terminal (KE-D) using a call register element which is independent of the call already existing beforehand, both the clear-down of the call existing between the first (KE-D) and the second (KE-C) communications terminal and, simultaneously, the communication of a special signalling information item via the signalling channel to the first communications terminal are effected by the central system control (ASt) as a result of the actuation of a special function key ST on the basis of the key identification information communicated by this means to the communications system and on the basis of the switching procedures read out in response from the assigned memory area (KD) of the database (DB), in that this special signalling information item automatically generates a message corresponding to call acceptance and thus initiates the call set-up procedure, and the through-connection of the first communications terminal (KE-D) to the communications terminal (KE-A) transferred to the hold state is effected.

2. Method for the operation of a program-controlled communications system according to Claim 1, characterized in that the call which is accepted by the second (KE-C) communications terminal, which forms a special terminal equipment configuration together with at least one further terminal (KE-D), is set up as a consultation call by an internal communications terminal (KE-A), in that, accordingly, the partner communications terminal (KE-B) in the event of an originally existing internal call connection or an exchange circuit in the event of an originally existing external call connection has, beforehand, been transferred to the hold state by this originating communications terminal (KE-A) .

3. Method for the operation of a program-controlled communications system according to Claim 2, characterized in that the first communications terminal (KE-D) of the special equipment configuration is primarily connected through to the originating communications terminal (KE-A) placed on hold by the second communications terminal (KE-C), and is secondarily connected through to the terminal (KE-B) or exchange circuit placed on hold by this originating communications terminal in those cases where the originating communications terminal (KE-A) has transferred to the idle operating state.

4. Method for the operation of a program-controlled communications system according to Claim 1, characterized in that the call through-connection to the communications terminal (KE-A) or exchange circuit on hold is indicated on the communications terminals (KE-D; KE-C) of the special equipment configuration by means of specific optical and/or acoustic signalling which differs from the signalling provided for other switching states of these communications terminals.

5. Method for the operation of a program-controlled communications system according to one of the preceding claims, characterized in that line-seizing keys (TL3, TL4) are provided as required for the establishment of a call between the first and the second communications terminal of the special equipment configuration and for the establishment of a call between these communications terminals and a calling terminal, the actuation of which keys effects a complete call set-up, in that the respective line status is signalled by optical displays which are preferably respectively integrated in these keys.

6. Method for the operation of a program-controlled communications system according to one of the preceding claims, characterized in that if the originating communications terminal (KE-A) of the call which is accepted by the second communications terminal (KE-C) of the special equipment configuration has been transferred to a special hold state (exclusive hold) which exclusively permits the cancellation of this call by this second communications terminal, the conversion of the said special hold state into a normal hold state (common hold) is effected by the central system control on the basis of the call establishment undertaken between the first and the second communications terminal, with the result that the precondition for the through-connection of the first communications terminal (KE-D) to the communications terminal (KE-A or KE-B) put into the hold state thereby exists.

7. Method for the operation of a program-controlled communications system with a memory in which an area to be assigned in a call-specific manner is used as a call register (VS) and as a queue memory (WS), according to one of the preceding claims, characterized in that the element of the call register (VSS1), which element receives the call-specific information items, only comprises memory locations for the switching state or for identification information items for a maximum of three communications terminals even in those cases where the terminal which calls the first communications terminal of the special equipment configuration has in turn transferred to the hold state a communications terminal with which it had a call connection.

## Revendications

1. Procédé pour faire fonctionner un système de communication avec commande programmée auquel sont raccordés des terminaux de communication qui comportent des touches de lignes et/ou de fonctions dont l'actionnement permet de déclencher des procédures de commutation et des procédures d'établissement de communication, dans lequel les informations déclenchant et commandant ces procédures ainsi que les informations d'identification de touches sont contenues dans les zones de mémoire, associées respectivement à une touche, de la base de données à laquelle accède la commande centrale du système, et il est mémorisé, dans la base de données, des informations spécifiques aux appareils et concernant, entre autres, des configurations de raccordements, des autorisations et des services et des informations concernant des fonctions physiques, par exemple le type des interfaces, et dans lequel il est prévu comme configuration d'appareils au moins un groupe composé d'au moins un premier terminal de communication et un deuxième terminal de communication et une connexion arrivante adressée au premier terminal de communication est signalée simultanément aussi bien au premier qu'au deuxième terminaux de communication, de préférence de manière différente, des informations spécifiques à la communication étant écrites et lues par la commande centrale du système dans des segments d'une mémoire de travail, qui sont associés de façon dynamique et qui servent d'éléments de mémoire de communication et d'éléments de mémoire de file d'attente, aussi bien pendant l'établissement de la communication que lors d'une communication existante,
caractérisé par le fait que, dans les cas où la communication arrivante signalée simultanément aux deux terminaux de communication (KE-D, KE-C) a d'abord été prise par le deuxième terminal de communication (terminal secrétaire KE-C) et a ensuite été mise en état de garde, on déclenche de ce terminal (KE-C) vers le premier terminal de communication (KE-D) un établissement de communication en exploitant un élément de mémoire de communication indépendant de la communication déjà établie auparavant, on provoque par l'actionnement d'une touche de fonction spéciale ST, sur la base de l'information d'identification de touche ainsi transmise au système de communication et sur la base des procédures de commutation lues alors dans la zone de mémoire associée (KD) de la base de données (DB), au moyen de la commande centrale du système (ASt), aussi bien la libération de la communication existant entre le premier (KE-D) et le deuxième (KE-C) terminal de communication que, simultanément, la transmission d'une information de signalisation particulière au premier terminal de communication par l'intermédiaire du canal de signalisation, et, à cause de cette information de signalisation particulière, on produit automatiquement un message correspondant à l'acceptation d'appel, et on déclenche ainsi la procédure d'établissement de communication et on effectue la connexion du premier terminal de communication (KE-D) au terminal de communication (KE-A) mis en état de garde.

2. Procédé pour faire fonctionner un système de communication avec commande programmée selon la revendication 1,
caractérisé par le fait que
un terminal de communication interne (KE-A) établit sous forme de conversation en double appel la communication acceptée par le second terminal de communication (KE-C) formant avec au moins un autre terminal de communication (KE-D) une configuration de terminaux particulière et que, par conséquent, ce terminal de communication initial (KE-A) a mis auparavant en état de garde le terminal de communication du correspondant (KE-B) dans le cas d'une communication vocale interne existant initialement ou un central dans le cas d'une communication vocale externe existant initialement.

3. Procédé pour faire fonctionner un système de communication avec commande programmée selon la revendication 2,
caractérisé par le fait que
l'on effectue dans un premier temps la connexion du premier terminal de communication (KE-D) de la configuration d'appareils particulière vers le terminal de communication initial (KE-A) mis en état de garde par le deuxième terminal de communication (KE-C) et dans un second temps la connexion vers le terminal (KE-B) ou le central mis en état de garde pour sa part par ce terminal de communication initial (KE-A) dans les cas où le terminal de communication initial (KE-A) est passé à l'état de repos.

4. Procédé pour faire fonctionner un système de communication avec commande programmée selon la revendication 1,
caractérisé par le fait que
l'on indique la connexion de la communication vers le terminal de communication (KE-A) ou le central mis en état de garde aux terminaux de communication (KE-D; KE-C) de la configuration d'appareils particulière au moyen d'une certaine signalisation optique et/ou acoustique qui se distingue de la signalisation prévue pour d'autres états de commutation de ces terminaux de communication.

5. Procédé pour faire fonctionner un système de communication avec commande programmée selon l'une des revendications précédentes,
caractérisé par le fait que,
si nécessaire, pour l'établissement d'une communication entre le premier et le deuxième terminal de communication de la configuration d'appareils particulière et pour l'établissement d'une communication de ces terminaux de communication avec un terminal appelant, on prévoit des touches d'occupation de ligne (TL3, TL4) dont l'actionnement provoque le complet établissement de la communication, et on effectue une signalisation de l'état respectif de la ligne par des affichages optiques qui sont intégrés de préférence dans ces touches.

6. Procédé pour faire fonctionner un système de communication avec commande programmée selon l'une des revendications précédentes,
caractérisé par le fait que,
si le terminal de communication initial (KE-A) de la communication acceptée par le deuxième terminal de communication (KE-C) de la configuration d'appareils particulière a été mis dans un état de garde spécial (exclusive hold) qui autorise seulement la reprise de cette communication par ce deuxième terminal de communication, la commande centrale du système provoque, sur la base de l'établissement de communication effectué entre le premier et le deuxième terminal de communication, la transformation dudit état de garde spécial en un état de garde normal (common hold) de telle sorte que la condition pour la connexion du premier terminal de communication (KE-D) vers le terminal de communication (KE-A ou KE-B) mis en état de garde est satisfaite.

7. Procédé pour faire fonctionner un système de communication avec commande programmée comportant une mémoire dans laquelle une zone à associer individuellement à chaque communication est utilisée comme mémoire de communication (VS) et comme mémoire de file d'attente (WS), selon l'une des revendications précédentes, caractérisé par le fait que, même dans les cas où le terminal qui a appelé le premier terminal de communication de la configuration d'appareils particulière a mis pour sa part en état de garde un terminal de communication avec lequel il se trouvait en communication vocale, l'élément de la mémoire de communication (VSS1) qui mémorise des informations spécifiques à une communication comprend seulement des emplacements de mémoire destinés à l'état de commutation, c'est-à-dire à des informations de caractérisation, pour au maximum trois terminaux de communication.
